# EUROPÄISCHE PATENTANMELDUNG

(11) **EP 4 390 155 A1**
(43) Veröffentlichungstag der Anmeldung: **26.06.2024**
(21) Anmeldenummer: 23218562.9
(22) Anmeldetag: 20.12.2023
(51) Int. Cl.: F16B 7/04, F16B 7/18

(54) **KLEMMVERBINDER**

(30) Priorität: 20.12.2022 DE 202022107116 U
(71) Anmelder: RK Rose + Krieger GmbH Verbindungs- und Positioniersysteme, 32423 Minden (DE)
(72) Erfinder: BRAUN, Johann, 32369 Rahden (DE); MEIER, Emanuel, 32423 Minden (DE); NEUBAUR, Michael, 31655 Stadthagen (DE)
(74) Vertreter: Kleine, Hubertus

(57) **Zusammenfassung**

Klemmverbinder (1) zum Verbinden zweier Rundrohre (3) bzw. Rundrohrabschnitte, der entlang einer axialen Richtung der Rundrohre (3) zweigeteilt ist und zwei mit ihren Endabschnitten (11) in die Rundrohre (3) einsetzbare Spannelemente (10) und mindestens eine Spanneinrichtung aufweist, um die Spannelemente (10) radial voneinander weg zu drücken, wobei die Endabschnitte (11) ein u-förmiges Profil aufweisen.

## Beschreibung

Die Erfindung betrifft einen Klemmverbinder zum Verbinden zweier Rundrohre bzw. Rundrohrabschnitte, der entlang einer axialen Richtung der Rundrohre zweigeteilt ist und zwei mit ihren Endabschnitten in die Rundrohre einsetzbare Spannelemente aufweist und mindestens eine Spanneinrichtung, um die Spannelemente radial voneinander weg zu drücken.

Derartige Klemmverbinder finden in unterschiedlichsten Anwendungsbereichen Verwendung, beispielsweise zum temporären oder dauerhaften Aufbau von Gestellen oder sonstigen Tragekonstruktionen aus Rundrohren. Die Klemmverbinder können dazu mit geraden Rohrabschnitten sowie Winkel-, Kreuz- und/oder Gelenkelementen eingesetzt werden. Bei den Winkeln-, Kreuz- bzw. Gelenkelementen sind zwei oder mehr Rohrabschnitte zusammengefügt.

Jeweils zwei Rohre bzw. Rohrabschnitte werden mittels des Klemmverbinders miteinander verbunden, indem sie von je einer Seite auf den Klemmverbinder aufgesteckt werden. Der Klemmverbinder der eingangs genannten Art greift also von Innen in die Rohre ein. Durch die Spanneinrichtung werden dann die Spannelemente auseinandergedrückt, wodurch die Rundrohre klemmend auf dem Klemmverbinder gehalten werden. Gegenüber ähnlichen Klemmverbindern, die Rohre von außen einklemmen, lassen sich mit den innen eingesetzten Klemmverbindern schlanke Verbindungen realisieren, die radial nicht oder nur unwesentlich über die Abmessungen des jeweiligen Rundrohrs hinausragen.

Derartige Klemmverbinder sind beispielsweise aus den Druckschriften FR72 3,4 91A oder GP2449097A bekannt. Sie bestehen im Wesentlichen aus zwei Spannelementen, die entlang einer axial verlaufenden Ebene aufeinander liegen oder ineinander greifen und mit ihren Endabschnitten in die zu verwendenden Rohre eingesetzt werden. Axial mittig am Klemmverbinder ist ein Mittelabschnitt ausgebildet, der einen größeren Durchmesser als die Endabschnitte aufweist und an dem die Rohre anliegen. Die Endabschnitte weisen jeweils einen teilkreisförmigen Querschnitt auf und ergänzen sich zu einem im Wesentlichen runden Profil, dessen Außendurchmesser etwas kleiner ist als ein Innendurchmesser der Rohre. Die auf- oder ineinanderliegenden Endabschnitte können so in die Rohre eingesetzt werden. Im Mittelabschnitt ist als Spannelement mindestens eine Schraube angeordnet, die bei einem Verdrehen die beiden Spannelemente auseinander drückt, wodurch die Rohre von innen klemmend gehalten werden.

Bei Rundrohren führt das Auseinanderdrücken der Spannelemente zu Spannkräften entlang von zwei gegenüberliegenden axial verlaufenden Kontaktlinien auf der Innenfläche der Rundrohre. In der Ebene, die durch die beiden Kontaktlinien führt, wird eine hohe Festigkeit der Verbindung zum Rohr bzw. Rohrabschnitt erzielt. In der zu dieser Ebene senkrecht stehenden Richtung werden die Rohre nicht geklemmt, was dazu führt, dass in dieser Richtung ein Winkelspiel verbleibt. Dieses kann zu nicht winkelmaßhaltigen Gestellen bzw. zu Instabilitäten der Gestelle oder sonstiger mit den Klemmverbindern aufgebauter Anordnungen führen.

Es ist daher eine Aufgabe der vorliegenden Erfindung, einen Klemmverbinder der eingangs genannten Art zur Verwendung mit Rundrohren zu schaffen, der eine stabile und winkelmaßhaltige Verbindung in allen Raumrichtungen ermöglicht.

Diese Aufgabe wird durch einen Klemmverbinder mit den Merkmalen des unabhängigen Anspruchs gelöst. Vorteilhafte Ausgestaltungen und Weiterbildungen sind Gegenstand der abhängigen Ansprüche.

Ein erfindungsgemäßer Klemmverbinder zeichnet sich dadurch aus, dass die Endabschnitte ein u-förmiges Profil aufweisen. Das u-förmige Profil weist eine Basis und zwei Schenkel auf und zwischen diesen entsprechend zwei Übergangsbereiche, z.B. Kanten. Die Übergangsbereiche bzw. Kanten stehen radial weiter nach außen vor als die Flächen der Basis und der Schenkel. Beim Auseinanderdrücken der Spannelemente bilden die Übergangsbereiche bzw. Kanten somit die Kontaktbereiche zum Rohr bzw. Rohrabschnitt. Dieses führt dazu, dass ein aufgestecktes Rundrohr bzw. ein Rundrohrabschnitt nicht nur entlang von zwei gegenüberliegenden Kontaktlinien geklemmt wird, sondern an vier Kontaktlinien oder Kontaktbereichen, die in einem rechteckigen Muster angeordnet sind. Gestelle oder andere Anordnungen, die unter Verwendung erfindungsgemäßer Klemmverbinder aufgebaut werden, sind entsprechend winkelmaßhaltig und stabil.

Bevorzugt sind die Kanten zwischen der Basis und den Schenkeln abgerundet. Bevorzugt ist dabei eine Klemmanordnung, bei der ein Radius der Abrundung gleich dem Radius der zu klemmenden Rundrohre bzw. Rohrabschnitte ist.

Durch die Abrundung werden die Kontaktbereiche zwischen den Endabschnitten und den aufgesteckten Rohren bzw. Rohrabschnitten vergrößert. Bevorzugt sind die abgerundeten Kanten jeweils mit einer Riffelung versehen. Durch die Riffelungen wird der Reibschluss bei der Klemmung erhöht.

In einer vorteilhaften Ausgestaltung des Klemmverbinders weisen die Spannelemente jeweils einen Mittelabschnitt auf, an den sich in der axialen Richtung die Endabschnitte anschließen. Die Spannelemente sind so aufeinander gelegt, dass jeweils aufeinanderliegende Endbereiche zusammen in eines der zu verbindenden Rundrohre bzw. Rohrabschnitte eingesteckt wird.

In einer Ausgestaltung ist an dem Mittelabschnitt ein zu dem gegenüberliegenden Spannelement weisender Block angeordnet, durch den eine Gewindebohrung in Richtung des gegenüberliegenden Spannelements führt, in die eine Schraube oder ein Gewindestift als Spannmittel eingeschraubt ist. Auf diese Weise kann im Mittelabschnitt das Spannmittel einfach und kompakt durch den Gewindestift oder die Schraube ausgebildet sein. Der Block stellt sicher, dass die Gewindebohrung eine ausreichende Länge hat, um auch große Spannkräfte ausüben zu können. Der Mittelabschnitt steht radial bevorzugt zudem über die Endabschnitte hervor, wodurch beidseitig Schultern als Anlageflächen und Anschläge für die Wandung des aufgesteckten Rohrs gebildet sind.

Weiter vorteilhaft sind die Spannelemente identische Gleichteile, wodurch der Herstellungsaufwand und damit auch die Herstellungskosten der Klemmverbinder minimiert werden. Die Spannelemente können aus Zink oder Aluminium in einem Druckguss, aus Stahl oder Kunststoff gefertigt sein.

Die Erfindung wird nachfolgend anhand eines Ausführungsbeispiels mithilfe von Figuren näher erläutert. Die Figuren zeigen:
- Figur 1a, b: eine beispielhafte Klemmanordnung mit einem Winkelelement und zwei Klemmverbindern;
- Figur 1c: die Klemmanordnung gemäß den Figur 1a, b, ergänzt um ein Rundrohr;
- Figur 2: eine räumliche Detailansicht eines Klemmverbinders der Klemmanordnung der Figuren 1a-c;
- Figur 3a-c: drei verschiedene Ansichten eines Spannelements des Klemmverbinders der Figur 2; und
- Figur 4: eine Schnittdarstellung der Klemmanordnung aus Figur 1b in einem klemmenden Zustand des Klemmverbinders.

In den nachfolgend beschriebenen Figuren ist ein Ausführungsbeispiel eines erfindungsgemäßen Klemmverbinders dargestellt. In allen Figuren kennzeichnen gleiche Bezugszeichen gleiche Elemente. Aus Gründen der Übersichtlichkeit ist nicht in jeder Figur jedes Element mit einem Bezugszeichen versehen.

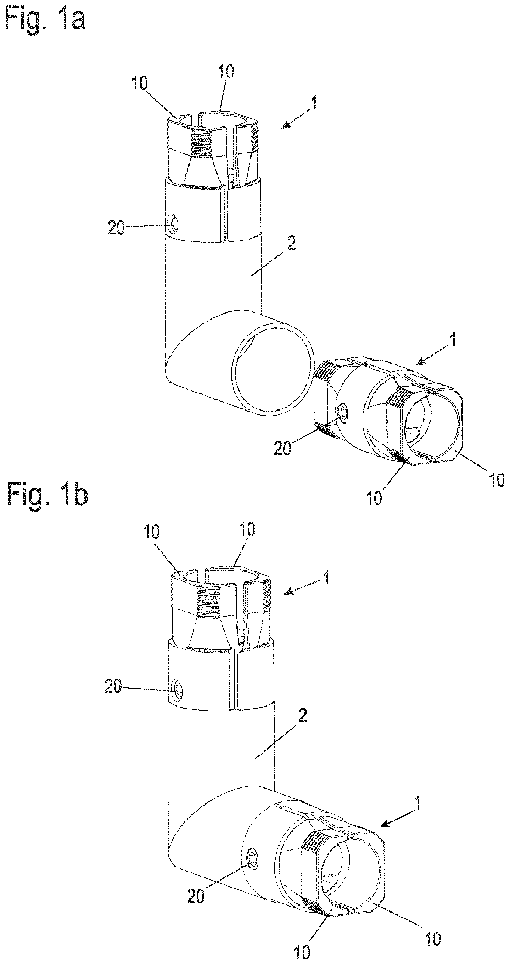

In den Figuren 1a bis 1c ist zunächst in jeweils einer Schrägansicht eine Klemmanordnung, die Teil eines größeren Systems, zum Beispiel eines Gestells, sein kann, in verschiedenen Stadien ihres Zusammenbaus gezeigt.

In Figur 1a umfasst die Klemmanordnung zwei Klemmverbinder 1 und ein Winkelelement 2. Das Winkelelement 2 ist aus zwei Rundrohrabschnitten gefertigt.

Im dargestellten Beispiel stehen die beiden Rundrohrabschnitte des Winkelelements 2 in einem Winkel von 90° zueinander. Es können auch Winkelelemente mit anderen Winkeln verwendet werden, ebenso wie Bogenelemente. Auch können Elemente eingesetzt werden, die aus mehr als zwei Rundrohrabschnitten gefertigt sind, beispielsweise Eckelemente, die drei Abschnitte aufweisen, und Kreuzelemente mit vier Abschnitten.

Einer der Klemmverbinder 1 ist in der Figur 1a in eine Öffnung des Winkelelements 2 eingesetzt, der andere Klemmverbinder 1 befindet sich vor der anderen Öffnung des Winkelelements 2 in einer Position vor dem Einsetzen. In Figur 1b ist dieser zweite Klemmverbinder 1 dann ebenfalls eingesetzt.

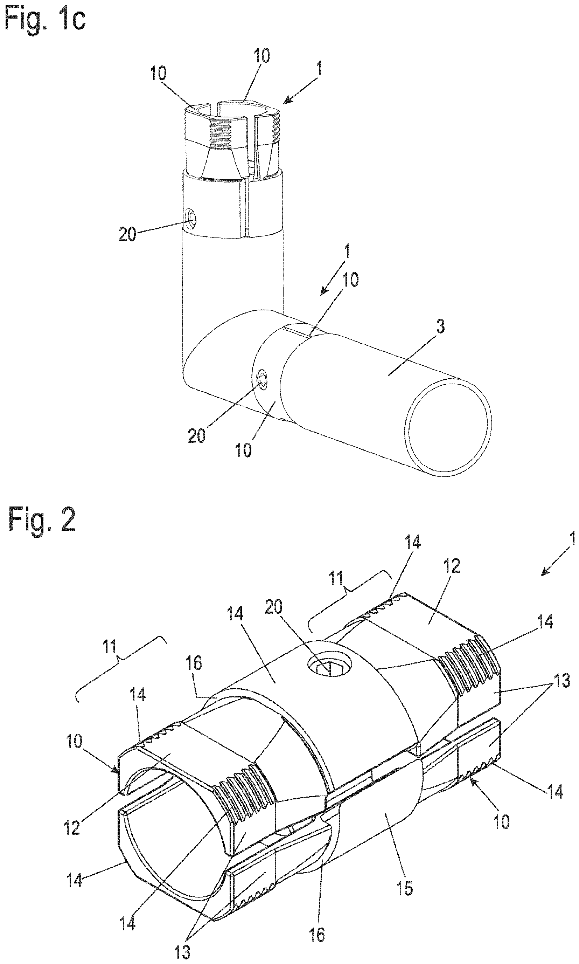

Jeder der Klemmverbinder 1 ist aus zwei Spannelementen 10 gebildet, die entlang einer axial ausgerichteten Mittelebene aufeinandergelegt sind und teilweise ineinandergreifen. Der Aufbau des Klemmverbinders 1 wird in den nachfolgenden Figuren noch detaillierter erläutert. Auf den jeweils herausstehenden Teil der Klemmverbinder 1 kann dann ein zweites Rohr bzw. ein Rohrabschnitt aufgesetzt werden, wie das in Figur 1c mit einem Rundrohr 3 bei einem der Klemmverbinder 1 gezeigt ist.

Das Rundrohr 3 bzw. die Rohrabschnitte des Winkelelements 2 liegen jeweils an einem mittleren Abschnitt des Klemmverbinders 1 an, der radial über die eingesteckten Endabschnitte hervorsteht. In diesem mittleren Abschnitt sind Gewindestifte 20 als Spannmittel angeordnet, mit denen die beiden Spannelemente 10 des Klemmverbinders 1 auseinander gedrückt werden können, wodurch sich der Klemmverbinder 1 innen in dem Rundrohr 3 bzw. den Rohrabschnitten verklemmt und diese so miteinander verbindet.

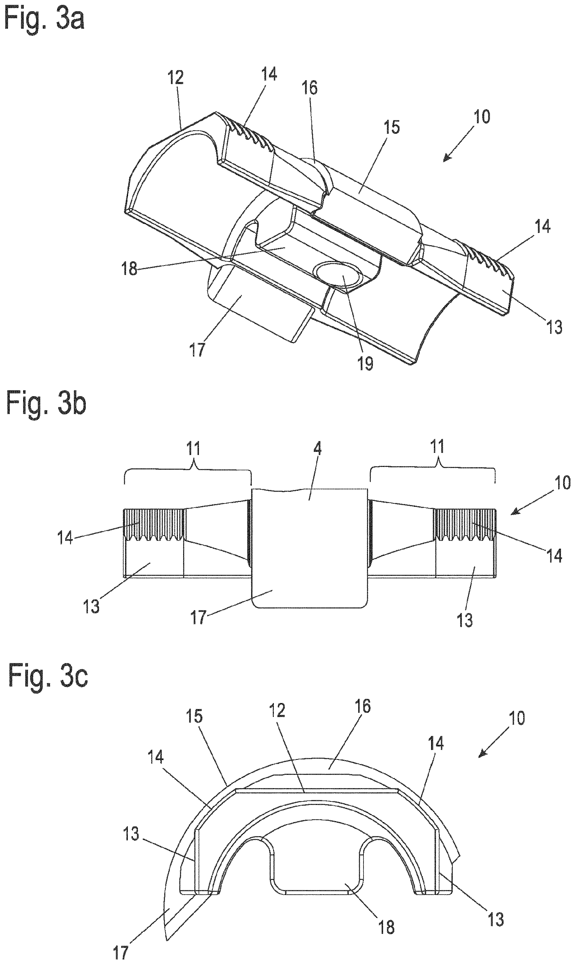

Figur 2 zeigt den Klemmverbinder 1 in einer räumlichen Darstellung separat detaillierter. In den Figuren 3a bis c sind verschiedene Darstellungen eines der Spannelemente 10 des Klemmverbinders 1 wiedergegeben. Figur 3a zeigt eine räumliche Darstellung des Spannelements 10, wobei schräg auf die Innenseite geblickt wird, d.h. auf die Seite, die im zusammengesetzten Zustand zu dem zweiten Spannelement 10 weist. Figur 3b zeigt eine Seitenansicht und Figur 3c ein Frontansicht auf das Spannelement 10.

Das Spannelement 10 weist zwei Endabschnitte 11 auf, die, wie in den Figuren 1a-c dargestellt ist, jeweils in ein offenes Ende des Rundrohrs 3 bzw. Rohrabschnitts des Winkelelements 2 eingesetzt werden. Die Endabschnitte 11 sind von einem Mittelabschnitt 15 getrennt, der radial weiter nach außen ragt als die Endabschnitte 11. Entsprechend ist zu beiden Seiten des Mittelabschnitts 15 eine Schulter 16 gebildet, an der das Rundrohr 3 bzw. die Rohrabschnitte mit ihrer Wandlung anliegen. Die Schultern 16 bilden somit axiale Anschläge für das Einsetzen des Klemmverbinders 1 in das Rundrohr 3 oder den Rohrabschnitt.

Die Endabschnitte 11 sind u-förmig ausgebildet, mit einer Basis 12 und zwei Schenkeln 13. Der jeweilige Übergangsbereich zwischen der Basis 12 und jedem der Schenkel 13 ist abgerundet ausgebildet, wobei ein Rundungsradius gewählt ist, der bevorzugt gleich dem Innendurchmesser der zu verbindenden Rohre bzw. Rohrabschnitte ist. Der abgerundete Bereich ist zudem mit einer Riffelung 14 versehen. Im Mittelabschnitt 15 ist der bereits genannte Gewindestift 20 als Spannmittel axial außermittig angeordnet.

Zwei baugleiche Spannelemente 10 mit jeweils einem Gewindestift 20 bilden zusammen einen Klemmverbinder 1. Vorteilhaft kann durch Verwendung von Gleichteilen so der Herstellungsaufwand und damit auch die Herstellungskosten minimiert werden. Die Spannelemente 10 können aus Metall gefertigt sein, beispielsweise gegossen aus Stahl oder in einem Druckgussverfahren aus Zink oder Aluminium hergestellt. Auch die Verwendung von Kunststoff für die Spannelemente 10 ist denkbar.

Die Ausgestaltung des Spannelements 10 im Bereich seines Mittelabschnitts 15 ist insbesondere gut in den Figuren 3a-c erkennbar. Auf der Seite ist der Mittelabschnitt 15 nach unten, d.h. in Richtung des zweiten Spannelements 10 in Form einer Lasche 17 verlängert.

Mittig weist der Mittelabschnitt 15 einen in Richtung des anderen Spannelements 10 weisenden Block 18 auf, durch den eine Gewindebohrung 19 führt, in die der Gewindestift 20 eingeschraubt wird. Die Gewindebohrung ist in axialer Richtung außermittig angeordnet, so dass die Gewindestifte 20 beider aufeinanderliegender Spannelemente 10 aneinander vorbei geführt sind.

Werden die beiden Spannelemente 10 zu dem Klemmverbinder 1 zusammengelegt, liegt die Innenseite der Lasche 17 des einen Spannelements 10 an der Außenseite des Blocks 18 des anderen Spannelements 10 zur Führung an. Die Lasche 17 kann dabei nach innen leicht angeschrägt sein, um beim Zusammenfügen die Spannelemente 10 zueinander zu zentrieren. Der Bereich eines jeden Blocks 18 neben der Gewindebohrung 19 dient als Auflagefläche für den Gewindestift 20 des jeweils gegenüberliegenden Spannelements 10.

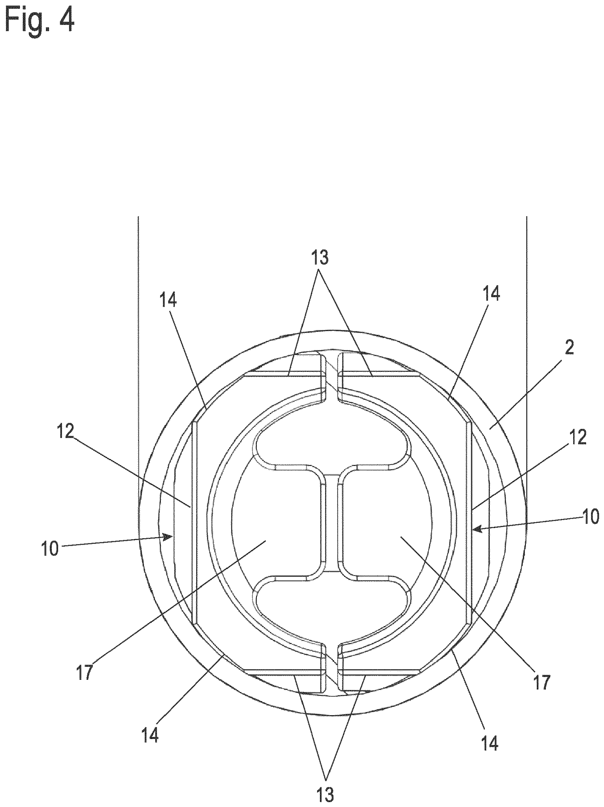

In Figur 4 ist ein Querschnitt durch einen Klemmverbinder 1 dargestellt, der in einen Rohrabschnitt eingesetzt ist, hier beispielhaft des Winkelelements 2 gemäß Figur 1c. Die Figur 4 zeigt den verspannten Zustand des Klemmverbinders 1.

Beim Einschrauben der beiden Gewindestifte 20 drücken sich die beiden Spannelemente 10 auseinander. Aufgrund des u-förmigen Profils der Endabschnitte 11 stehen die abgerundeten Bereiche mit den Riffelungen 14 am Übergang zwischen der Basis 12 und jedem der Schenkel 13 radial weiter nach außen vor als die Flächen der Basis 12 und der Schenkel 13. Beim Auseinanderdrücken der Spannelemente bilden die abgerundeten Bereiche mit den Riffelungen 14 somit die Kontaktbereiche zum Rohr bzw. Rohrabschnitt. Dieses führt dazu, dass der Klemmverbinder 1 in vier Kontaktbereichen, die in einem hier annähernd quadratischen Muster angeordnet sind, an dem aufgesteckten Rohrabschnitt des Winkelelements 2 anliegen. Entsprechend wird der Rohrabschnitt und damit das Winkelelement 2 winkelmaßhaltig und frei von Kippspiel geklemmt.

### Bezugszeichenliste

- 1: Klemmverbinder
- 2: Winkelelement
- 3: Rundrohr

- 10: Spannelement
- 11: Endabschnitt
- 12: Basis
- 13: Schenkel
- 14: Riffelung
- 15: Mittelabschnitt
- 16: Schulter
- 17: Lasche
- 18: Block
- 19: Gewindebohrung

- 20: Gewindestift

## Patentansprüche

1. Klemmverbinder (1) zum Verbinden zweier Rundrohre (3) bzw. Rundrohrabschnitte, der entlang einer axialen Richtung der Rundrohre (3) zweigeteilt ist und zwei mit ihren Endabschnitten (11) in die Rundrohre (3) einsetzbare Spannelemente (10) und mindestens eine Spanneinrichtung aufweist, um die Spannelemente (10) radial voneinander weg zu drücken,
**dadurch gekennzeichnet, dass**
die Endabschnitte (11) ein u-förmiges Profil aufweisen.

2. Klemmverbinder (1) nach Anspruch 1, bei dem die u-förmigen Endabschnitte (11) jeweils eine Basis (12) und zwei Schenkel (13) aufweisen,
wobei Kanten zwischen der Basis (12) und den Schenkeln (13) abgerundet sind.

3. Klemmverbinder (1) nach Anspruch 2, bei dem die abgerundeten Kanten jeweils mit einer Riffelung (14) versehen sind.

4. Klemmverbinder (1) nach Anspruch 1, bei dem die Spannelemente (10) jeweils einen Mittelabschnitt (15) aufweisen, an den sich in der axialen Richtung die Endabschnitte (11) anschließen.

5. Klemmverbinder (1) nach Anspruch 4, bei dem an dem Mittelabschnitt (15) ein zu dem gegenüberliegenden Spannelement (10) weisender Block (18) angeordnet ist, durch den eine Gewindebohrung (19) in Richtung des gegenüberliegenden Spannelements (10) führt, in die eine Schraube oder ein Gewindestift (20) als Spannmittel eingeschraubt ist.

6. Klemmverbinder (1) nach Anspruch 5, bei dem die Gewindebohrung in axialer Richtung außermittig im Mittelabschnitt (15) angeordnet ist.

7. Klemmverbinder (1) nach einem der Ansprüche 4 bis 6, bei dem der Mittelabschnitt (15) radial über die Endabschnitte (11) hervorsteht.

8. Klemmverbinder (1) nach einem der Ansprüche 1 bis 7, bei dem die Spannelemente (10) identische Gleichteile sind.

9. Klemmverbinder (1) nach einem der Ansprüche 1 bis 8, bei dem die Spannelemente (10) aus Zink, Aluminium, Stahl oder Kunststoff gefertigt sind.
